# EUROPEAN PATENT APPLICATION

(11) **EP 4 512 497 A1**
(43) Date of publication of application: **26.02.2025**
(21) Application number: 24196238.0
(22) Date of filing: 23.08.2024
(51) Int. Cl.: A63F 13/655, A63F 13/67

(54) **SYSTEM AND METHOD FOR GENERATING CHARACTERS ASSOCIATED WITH DIGITAL INTERACTIVE PLATFORMS TO OPTIMIZE USER EXPERIENCE**

(30) Priority: 25.08.2023 IN 202341056968
(71) Applicant: Awone Datasciences Private Limited, 500067 Hyderabad Telangana (IN)
(72) Inventor: Bhandaru, Vamsi Mohan, 500018 Hyderabad (IN); Kochar, Sarabjeet Singh, 1389 Heggedal (NO)
(74) Representative: Ricker, Mathias

(57) **Abstract**

A computer-implemented system (106) for generating characters associated with digital interactive platforms to optimize user experience, is disclosed. The computer-implemented system (106) is configured to: pre-create characters for users (102) based on first inputs from user devices (104) of users (102), by diffusion models, cycle (GAN) model, and pix2pix model; select at least one character with face expressions during playing of video contents associated with digital interactive platforms based on historical data and first inputs; obtain second inputs from the user devices (104) of users (102) upon actions performed by the users (102) during digital interactive platforms, and current state of digital interactive platforms; and determine corresponding characters providing the face expressions to be played as animated media contents with the video contents, based on second inputs from the user devices (104) of the users (102), to optimize the user experience in digital interactive platforms, by a machine learning model.

## Description

### FIELD OF INVENTION

Embodiments of the present disclosure relate to a user engagement system in digital interactive platforms and more particularly relate to a computer-implemented system and method for generating one or more characters providing one or more face expressions based on one or more actions performed by one or more users to optimize a user experience in one or more digital interactive platforms.

### BACKGROUND

Sports and iGaming industry has experienced a significant intersection in recent years, with both sectors benefiting from their collaboration. A merging of sports and iGaming has created new opportunities for entertainment, engagement, and revenue generation.

In the context of the sports and iGaming industry, an avatar typically refers to a graphical representation or digital persona that represents a player or user in a virtual environment. Avatars are commonly used in online gaming platforms, social media platforms, and sports-related applications to provide a visual identity for the player or user.

In sports-related applications, the avatars can be used to represent users in at least one of: fantasy sports leagues, online sports simulations, and digital interactive platforms (i.e., online games). The users/players can create and customize their avatars to resemble themselves or create fictional characters to participate in digital interactive platforms events. Even though the avatars used to participate in the digital interactive platforms events, the created avatars are allowed to perform only limited predefined activities, which impacts on minimizing user experience in the digital interactive platforms events.

Therefore, there is a need for an improved system and method for generating one or more characters to optimize a user experience in one or more digital interactive platforms, to address the aforementioned issues.

### SUMMARY

This summary is provided to introduce a selection of concepts, in a simple manner, which is further described in the detailed description of the disclosure. This summary is neither intended to identify key or essential inventive concepts of the subject matter nor to determine the scope of the disclosure.

In accordance with one embodiment of the disclosure, a computer-implemented system for generating one or more characters associated with one or more digital interactive platforms to optimize a user experience in the one or more digital interactive platforms, is disclosed. The computer-implemented system includes one or more hardware processors and a memory. The memory is coupled to the one or more hardware processors. The memory comprises a set of program instructions in form of a plurality of subsystems, configured to be executed by the one or more hardware processors. The plurality of subsystems comprises a character creating subsystem, a character selecting subsystem, an input obtaining subsystem, and a character determining subsystem.

The character creating subsystem is configured to pre-create one or more characters for one or more users based on first one or more inputs from one or more user devices of the one or more users, by at least one of: diffusion models, a cycle generative adversarial network (GAN) model, and a pix2pix model. In an embodiment, the one or more characters being assigned with one or more face expressions based on the first one or more inputs from the one or more users.

The character selecting subsystem is configured to select at least one character with the one or more face expressions during playing of one or more video contents associated with the one or more digital interactive platforms based on at least one of: historical data associated with the one or more digital interactive platforms and the first one or more inputs from the one or more user devices of the one or more users.

The input obtaining subsystem is configured to obtain second one or more inputs from the one or more user devices of the one or more users upon at least one of: one or more actions performed by the one or more users during the one or more digital interactive platforms, and a current state of the one or more digital interactive platforms.

The character determining subsystem is configured to determine corresponding one or more characters providing the one or more face expressions to be played as one or more animated media contents with the one or more video contents, based on the second one or more inputs from the one or more user devices of the one or more users, to optimize the user experience in the one or more digital interactive platforms, by a machine learning model.

In an embodiment, the first one or more inputs comprises first information associated with at least one of: a selection of the one or more characters in the one or more digital interactive platforms, and assigning of the one or more face expressions to each of the one or more characters in the one or more digital interactive platforms.

In another embodiment, the second one or more inputs comprises second information associated with one or more real-time face expressions provided by the one or more users, on at least one of: the one or more actions performed by the one or more users during the one or more digital interactive platforms, and the current state of the one or more digital interactive platforms.

In yet another embodiment, the one or more pre-created characters with the one or more face expressions, is pre-stored in a cloud database comprising at least one of: a content delivery network, and an object storage service.

In yet another embodiment, in determining, by the machine learning model, the corresponding one or more characters providing the one or more face expressions to be played with the one or more video contents, the character determining subsystem is configured to: (a) obtain the second one or more inputs comprising the second information associated with the one or more real-time face expressions provided by the one or more users, on at least one of: the one or more actions performed by the one or more users during the one or more digital interactive platforms, and the current state of the one or more digital interactive platforms, (b) compare the one or more real-time face expressions provided by the one or more users, with the one or more face expressions assigned to the one or more pre-created characters, and (c) determine corresponding one or more characters providing the one or more face expressions to be played as the one or more animated media contents with the one or more video contents based on the comparison of the one or more real-time face expressions provided by the one or more users, with the one or more face expressions assigned to the one or more pre-created characters, by the machine learning model.

In yet another embodiment, the one or more face expressions provided by the one or more characters, is dynamically updated based on the one or more real-time face expressions provided by the one or more users.

In yet another embodiment, the one or more animated media contents comprises at least one of: the determined one or more characters providing the one or more face expressions to be played with the one or more video contents, and second one or more video contents, to optimize the user experience in the one or more digital interactive platforms. The second one or more video contents is played upon the one or more user actions performed by the one or more users in the one or more video contents.

In yet another embodiment, the character creating subsystem is further configured to create second one or more characters with the one or more face expressions as the one or more animated media contents based on transformers when the one or more users personalizes the one or more video contents associated with the one or more digital interactive platforms.

In one aspect, a computer-implemented method for generating one or more characters associated with one or more digital interactive platforms to optimize a user experience in the one or more digital interactive platforms, is disclosed. The computer-implemented method includes pre-creating, by one or more hardware processors, one or more characters for one or more users based on first one or more inputs from one or more user devices of the one or more users, by at least one of: diffusion models, a cycle generative adversarial network (GAN) model, and a pix2pix model. In an embodiment, the one or more characters being assigned with one or more face expressions based on the first one or more inputs from the one or more users.

The computer-implemented method further includes selecting, by the one or more hardware processors, at least one character with the one or more face expressions during playing of one or more video contents associated with the one or more digital interactive platforms based on at least one of: historical data associated with the one or more digital interactive platforms and the first one or more inputs from the one or more user devices of the one or more users.

The computer-implemented method further includes obtaining, by the one or more hardware processors, second one or more inputs from the one or more user devices of the one or more users upon at least one of: one or more actions performed by the one or more users during the one or more digital interactive platforms, and a current state of the one or more digital interactive platforms.

The computer-implemented method further includes determining, by the one or more hardware processors, corresponding one or more characters providing the one or more face expressions to be played as one or more animated media contents with the one or more video contents, based on the second one or more inputs from the one or more user devices of the one or more users, to optimize the user experience in the one or more digital interactive platforms, by a machine learning model.

To further clarify the advantages and features of the present disclosure, a more particular description of the disclosure will follow by reference to specific embodiments thereof, which are illustrated in the appended figures. It is to be appreciated that these figures depict only typical embodiments of the disclosure and are therefore not to be considered limiting in scope. The disclosure will be described and explained with additional specificity and detail with the appended figures.

### BRIEF DESCRIPTION OF THE DRAWINGS

The disclosure will be described and explained with additional specificity and detail with the accompanying figures in which:

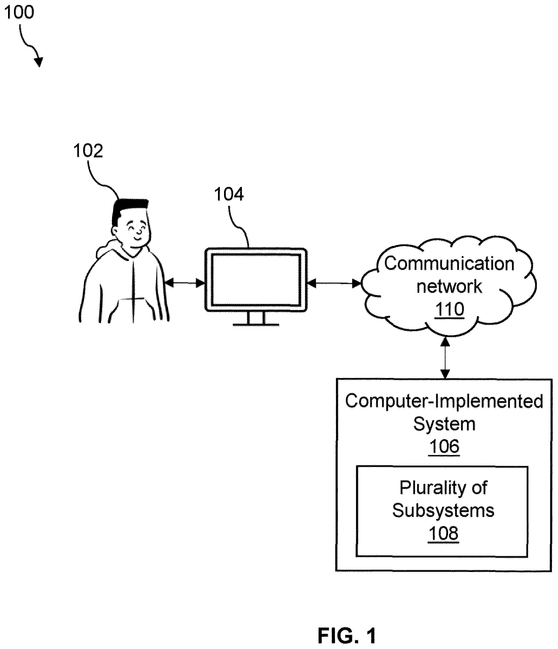

**FIG. 1** is a block diagram of a computer-implemented system for generating one or more video characters with one or more face expressions based on one or more actions performed by one or more users to optimize a user experience in one or more digital interactive platforms, in accordance with an embodiment of the present disclosure;

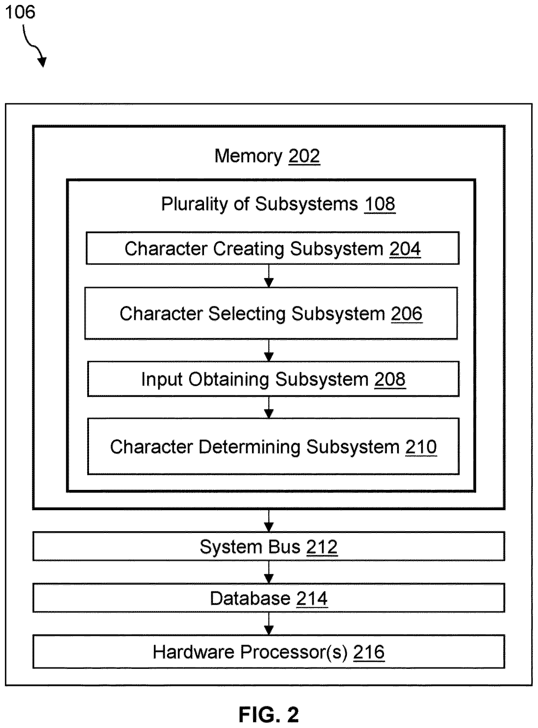

**FIG. 2** is a detailed view of the computer-implemented system, such as those shown in **FIG. 1****,** in accordance with an embodiment of the present disclosure;

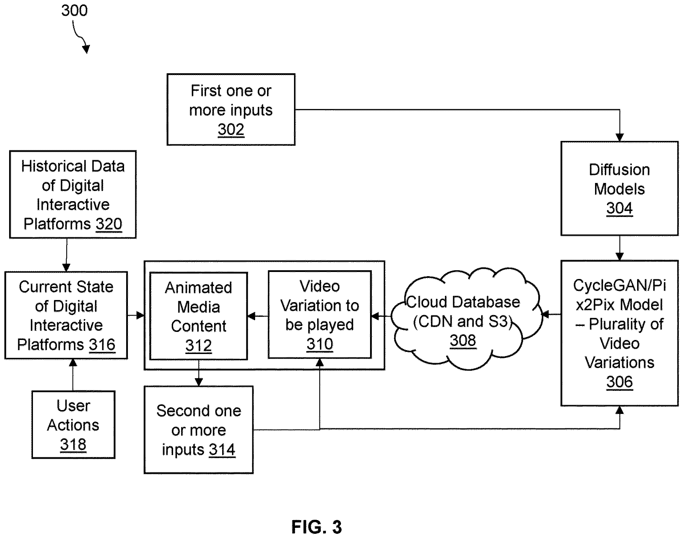

**FIG. 3** is an overall process flow for generating the one or more video characters with the one or more face expressions based on the one or more actions performed by the one or more users, such as those shown in **FIG. 1****,** in accordance with an embodiment of the present disclosure; and

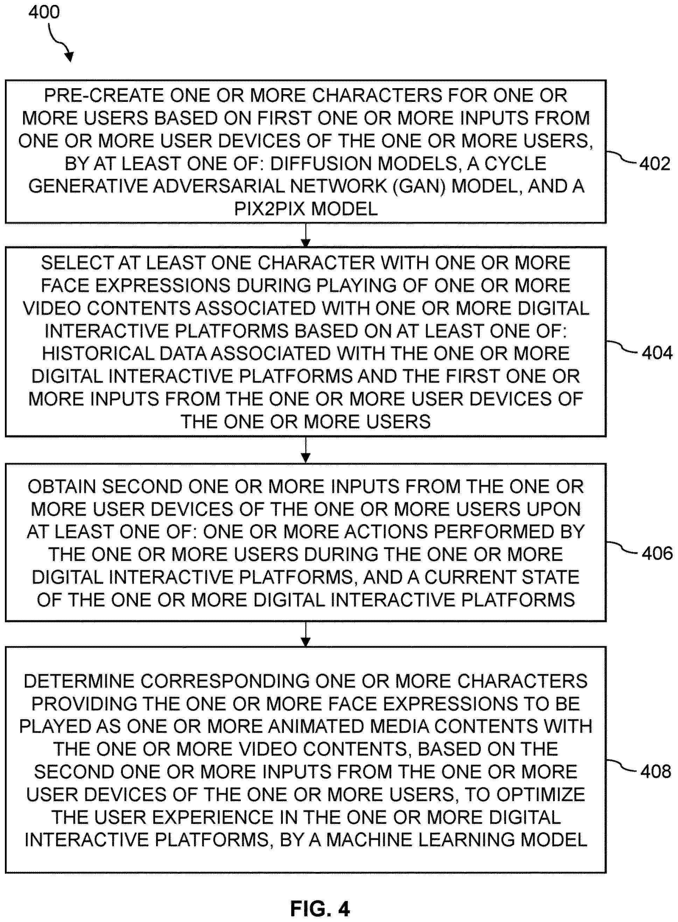

**FIG. 4** is a flow chart depicting a computer-implemented method for generating the one or more video characters with the one or more face expressions based on the one or more actions performed by the one or more users to optimize the user experience in the one or more digital interactive platforms, in accordance with an embodiment of the present disclosure.

Further, those skilled in the art will appreciate that elements in the figures are illustrated for simplicity and may not have necessarily been drawn to scale. Furthermore, in terms of the construction of the device, one or more components of the device may have been represented in the figures by conventional symbols, and the figures may show only those specific details that are pertinent to understanding the embodiments of the present disclosure so as not to obscure the figures with details that will be readily apparent to those skilled in the art having the benefit of the description herein.

### DETAILED DESCRIPTION

For the purpose of promoting an understanding of the principles of the disclosure, reference will now be made to the embodiment illustrated in the figures and specific language will be used to describe them. It will nevertheless be understood that no limitation of the scope of the disclosure is thereby intended. Such alterations and further modifications in the illustrated online platform, and such further applications of the principles of the disclosure as would normally occur to those skilled in the art are to be construed as being within the scope of the present disclosure.

The terms "comprises", "comprising", or any other variations thereof, are intended to cover a non-exclusive inclusion, such that a process or method that comprises a list of steps does not include only those steps but may include other steps not expressly listed or inherent to such a process or method. Similarly, one or more devices or subsystems or elements or structures or components preceded by "comprises... a" does not, without more constraints, preclude the existence of other devices, subsystems, elements, structures, components, additional devices, additional subsystems, additional elements, additional structures or additional components. Appearances of the phrase "in an embodiment", "in another embodiment" and similar language throughout this specification may, but not necessarily do, all refer to the same embodiment.

Unless otherwise defined, all technical and scientific terms used herein have the same meaning as commonly understood by those skilled in the art to which this disclosure belongs. The system, methods, and examples provided herein are only illustrative and not intended to be limiting.

In the following specification and the claims, reference will be made to a number of terms, which shall be defined to have the following meanings. The singular forms "a", "an", and "the" include plural references unless the context clearly dictates otherwise.

A computer system (standalone, client or server computer system) configured by an application may constitute a "module" (or "subsystem") that is configured and operated to perform certain operations. In one embodiment, the "module" or "subsystem" may be implemented mechanically or electronically, so a module include dedicated circuitry or logic that is permanently configured (within a special-purpose processor) to perform certain operations. In another embodiment, a "module" or "subsystem" may also comprise programmable logic or circuitry (as encompassed within a general-purpose processor or other programmable processor) that is temporarily configured by software to perform certain operations.

Accordingly, the term "module" or "subsystem" should be understood to encompass a tangible entity, be that an entity that is physically constructed permanently configured (hardwired) or temporarily configured (programmed) to operate in a certain manner and/or to perform certain operations described herein.

**FIG. 1** is a block diagram 100 of a computer-implemented system 106 for generating one or more video characters with one or more face expressions based on one or more actions performed by one or more users 102 to optimize a user experience in one or more digital interactive platforms, in accordance with an embodiment of the present disclosure. The computer-implemented system 106 is configured to optimize the user experience by generating the one or more characters providing the one or more face expressions corresponding to the one or more actions (i.e., one or more user actions) performed by the one or more users 102. The computer-implemented system 106 is initially configured to pre-create one or more characters (e.g., one or more virtual avatars) for the one or more users 102 based on first one or more inputs from one or more user devices 104 of the one or more users 102, by at least one of: diffusion models, a cycle generative adversarial network (GAN) model, and a pix2pix model.

In an embodiment, the first one or more inputs obtained from the one or more user devices 104 of the one or more users 102, includes first information associated with at least one of: a selection of the one or more characters in the one or more digital interactive platforms, and assigning of the one or more face expressions to each of the one or more characters in the one or more digital interactive platforms. In an embodiment, the one or more characters being assigned with one or more face expressions based on the first one or more inputs from the one or more users 102.

The computer-implemented system 106 is further configured to select at least one character with the one or more face expressions during playing of one or more video contents associated with the one or more digital interactive platforms based on at least one of: historical data associated with the one or more digital interactive platforms and the first one or more inputs from the one or more user devices 104 of the one or more users 102.

The computer-implemented system 106 is further configured to obtain second one or more inputs from the one or more user devices 104 of the one or more users 102 upon at least one of: one or more actions performed by the one or more users 102 during the one or more digital interactive platforms, and a current state of the one or more digital interactive platforms.

The computer-implemented system 106 is further configured to determine corresponding one or more characters providing the one or more face expressions to be played as one or more animated media contents with the one or more video contents, based on the second one or more inputs from the one or more user devices 104 of the one or more users 102, to optimize the user experience in the one or more digital interactive platforms, by a machine learning model. In an embodiment, the one or more animated media contents includes at least one of: the one or more face expressions provided by the one or more characters and one or more scenes (i.e., one or more second video contents) related to the one or more actions performed by the one or more users 102.

In an embodiment, the computer-implemented system 106 may be hosted on a central server including at least one of: a cloud server, a remote server, and the like. In another embodiment, the computer-implemented system 106 as the central server may pre-create the one or more characters for the one or more users 102 based on the first one or more inputs from the one or more user devices 104 of the one or more users 102. The computer-implemented system 106 as the central server may further determine the corresponding one or more characters providing the one or more face expressions to be played as the one or more animated media contents with the one or more video contents to optimize the user experience in the one or more digital interactive platforms, based on above said processes.

In an embodiment, the computer-implemented system 106 may be communicatively connected to the one or more user devices 104 through a communication network 110. The communication network 110 may be at least one of: a Wireless-Fidelity (Wi-Fi) connection, a hotspot connection, a Bluetooth connection, a local area network (LAN), a wide area network (WAN), any other wireless network, and the like. In an embodiment, the one or more user devices 104 may be at least one of: a personal computer, a Smartphone, an electronic notebook, a laptop, and the like.

**FIG. 2** is a detailed view of the computer-implemented system 106, such as those shown in **FIG. 1****,** in accordance with an embodiment of the present disclosure. The computer-implemented system 106 includes one or more hardware processor(s) 216. The computer-implemented system 106 further includes a memory 202 coupled to the one or more hardware processor(s) 216. The memory 202 includes a set of program instructions in form of the plurality of subsystems 108.

The one or more hardware processor(s) 216, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a digital signal processor, or any other type of processing circuit, or a combination thereof.

The memory 202 includes the plurality of subsystems 108 stored in the form of executable program which instructs the one or more hardware processor(s) 216 via a system bus 212 to perform the above-mentioned method steps. The plurality of subsystems 108 includes following subsystems: a character creating subsystem 204, a character selecting subsystem 206, an input obtaining subsystem 208, and a character determining subsystem 210.

Computer memory elements may include any suitable memory device(s) for storing data and executable program, such as read only memory, random access memory, erasable programmable read only memory, electronically erasable programmable read only memory, hard drive, removable media drive for handling memory cards and the like. Embodiments of the present subject matter may be implemented in conjunction with program modules, including functions, procedures, data structures, and application programs, for performing tasks, or defining abstract data types or low-level hardware contexts. Executable program stored on any of the above-mentioned storage media may be executable by the one or more hardware processor(s) 216.

The plurality of subsystems 108 includes the character creating subsystem 204 that is communicatively connected to the one or more hardware processor(s) 216. The character creating subsystem 204 is configured to pre-create the one or more characters for the one or more users 102 based on the first one or more inputs from the one or more user devices 104 of the one or more users 102, by at least one of: the diffusion models, the cycle generative adversarial network (GAN) model, and the pix2pix model. In an embodiment, the first one or more inputs obtained from the one or more user devices 104 of the one or more users 102, includes the first information associated with at least one of: the selection of the one or more characters in the one or more digital interactive platforms, and assigning of the one or more face expressions to each of the one or more characters in the one or more digital interactive platforms.

In an embodiment, the character creating subsystem 204 utilizes a pixel aligned implicit function (PifuHD) neural network model that is configured to generate a three dimensional (3D) model from a given image of the one or more characters. The 3D model is further enhanced by providing a plurality of images of the one or more same characters so that the PifuHD neural network model learns different views of the same person. Hence, the one or more users 102 can leverage at least one of: text2image or stable diffusion for further fine-tune the one or more characters based on the interest of the one or more users 102.

In another embodiment, an openpose model is configured to come up with a plurality of stick figures (i.e., operations at user end) from a plurality of actions performed by the one or more users 102. The stick figure poses are transferred to the actual player. In the whole process, the cycle generative adversarial network (GAN) model is configured to identify if the pre-created one or more avatars through the process is like a real 3D generated image (i.e., typically through unity and sculpting process) or a fake image.

In an embodiment, the one or more characters is assigned with the one or more face expressions based on the first one or more inputs from the one or more users 102. In an embodiment, data associated with the one or more pre-created characters providing the one or more face expressions, is pre-stored in a cloud database. In an embodiment, the cloud database may be at least one of: a content delivery network (CDN), and an object storage service (e.g., S3).

The plurality of subsystems 108 further includes the character selecting subsystem 206 that is communicatively connected to the one or more hardware processor(s) 216. The character selecting subsystem 206 is configured to select the at least one character with the one or more face expressions during playing of the one or more video contents associated with the one or more digital interactive platforms based on at least one of: the historical data associated with the one or more digital interactive platforms and the first one or more inputs from the one or more user devices 104 of the one or more users 102. In other words, the character selecting subsystem 206 is configured to select the one or more animated video contents including at least one of: the one or more activities (i.e., the one or more face expressions) performed by the one or more characters, upon the one or more actions performed by the one or more users 102.

The plurality of subsystems 108 further includes the input obtaining subsystem 208 that is communicatively connected to the one or more hardware processor(s) 216. The input obtaining subsystem 208 is configured to obtain the second one or more inputs from the one or more user devices 104 of the one or more users 102 upon at least one of: one or more actions performed by the one or more users 102 during the one or more digital interactive platforms, and the current state of the one or more digital interactive platforms. In an embodiment, the second one or more inputs includes second information associated with one or more real-time face expressions provided by the one or more users 102, on at least one of: the one or more actions performed by the one or more users 102 during the one or more digital interactive platforms, and the current state of the one or more digital interactive platforms.

The plurality of subsystems 108 further includes the character determining subsystem 210 that is communicatively connected to the one or more hardware processor(s) 216. The character determining subsystem 210 is configured to determine the corresponding one or more characters providing the one or more face expressions to be played as the one or more animated media contents with the one or more video contents, based on the second one or more inputs from the one or more user devices 104 of the one or more users 102, to optimize the user experience in the one or more digital interactive platforms, by the machine learning model. In an embodiment, the one or more animated media contents may include video contents in a graphics interchange format (GIF).

In an embodiment, in determining, by the machine learning model, the corresponding one or more characters providing the one or more face expressions to be played with the one or more video contents, the character determining subsystem 210 is configured to obtain the second one or more inputs including the second information associated with the one or more real-time face expressions provided by the one or more users 102, on at least one of: the one or more actions performed by the one or more users 102 during the one or more digital interactive platforms, and the current state of the one or more digital interactive platforms.

The character determining subsystem 210 is further configured to compare the one or more real-time face expressions provided by the one or more users 102, with the one or more face expressions assigned to the one or more pre-created characters.

The character determining subsystem 210 is further configured to determine the corresponding one or more characters providing the one or more face expressions to be played as the one or more animated media contents with the one or more video contents based on the comparison of the one or more real-time face expressions provided by the one or more users 102, with the one or more face expressions assigned to the one or more pre-created characters, by the machine learning model. In an embodiment, the machine learning model may be at least one of: a linear regression model, a decision tree model, a random forest model, and the like.

In an embodiment, the one or more animated media contents includes at least one of: the determined one or more characters providing the one or more face expressions to be played with the one or more video contents, and second one or more video contents, to optimize the user experience in the one or more digital interactive platforms. In an embodiment, the second one or more video contents is played upon the one or more actions performed by the one or more users 102 in the one or more video contents.

In an embodiment, the one or more face expressions provided by the one or more characters, is dynamically updated based on the one or more real-time face expressions provided by the one or more users 102. In an embodiment, the one or more updated face expressions provided by the one or more characters is stored in the cloud database.

In an embodiment, the character creating subsystem 204 is further configured to create second one or more characters (i.e., one or more new characters) with the one or more face expressions as the one or more animated media contents based on transformers when the one or more users 102 personalizes the one or more video contents associated with the one or more digital interactive platforms. The transformers are configured to modify latents of one or more faces so that one or more different facial expressions (i.e., facial animations) are generated depending on the text given as inputs. Further, the character creating subsystem 204 is configured to utilize the different latents to modify body poses as well, thereby resulting modifying image through the text. This is further extended to text2video so that we have continuous action.

**FIG. 3** is an overall process flow 300 for generating the one or more video characters with the one or more face expressions based on the one or more actions performed by the one or more users 102, such as those shown in **FIG. 1****,** in accordance with an embodiment of the present disclosure. The first one or more inputs is obtained from one or more user devices 104 of the one or more users 102, as shown in step 302. In an embodiment, the first one or more inputs obtained from the one or more user devices 104 of the one or more users 102, includes the first information associated with at least one of: the selection of one or more characters in the one or more digital interactive platforms, and assigning of the one or more face expressions to each of the one or more characters in the one or more digital interactive platforms.

The one or more characters providing the one or more face expressions is pre-created for the one or more users 102 using at least one of: the diffusion models (shown in step 304), the cycle generative adversarial network (GAN), and the pix2pix model (shown in step 306). The one or more pre-created characters with the one or more face expressions, is pre-stored in at least one of: the content delivery network (CDN), and the object storage service, as shown in step 308.

Further, the at least one character with the one or more face expressions is selected initially as a video variation that is to be played (as shown in step 310) during playing of the one or more video contents associated with the one or more digital interactive platforms based on at least one of: the historical data associated with the one or more digital interactive platforms (shown in step 320) and the first one or more inputs from the one or more user devices 104 of the one or more users 102. In an embodiment, the video variation to be played during the one or more video contents, may be the one or more animated media contents, as shown in step 312.

Further, the second one or more inputs is obtained from the one or more user devices 104 of the one or more users 102 based on the one or more video contents played with the one or more animated video contents (as shown in step 314), upon at least one of: the one or more actions (as shown in step 318) performed by the one or more users 102 during the one or more digital interactive platforms, and the current state of the one or more digital interactive platforms (as shown in step 316).

**FIG. 4** is a flow chart depicting a computer-implemented method 400 for generating the one or more video characters with the one or more face expressions based on the one or more actions performed by the one or more users 102 to optimize the user experience in the one or more digital interactive platforms, in accordance with an embodiment of the present disclosure.

At step 402, the one or more characters is pre-created for the one or more users 102 based on the first one or more inputs from the one or more user devices 104 of the one or more users 102, by at least one of: the diffusion models, the cycle generative adversarial network (GAN) model, and the pix2pix model. In an embodiment, the one or more characters is assigned with the one or more face expressions based on the first one or more inputs from the one or more users 102. In an embodiment, the first one or more inputs includes the first information associated with at least one of: the selection of the one or more characters in the one or more digital interactive platforms, and assigning of the one or more face expressions to each of the one or more characters in the one or more digital interactive platforms.

At step 404, the at least one character with the one or more face expressions is selected during playing of the one or more video contents associated with the one or more digital interactive platforms based on at least one of: the historical data associated with the one or more digital interactive platforms and the first one or more inputs from the one or more user devices 104 of the one or more users 102.

At step 406, the second one or more inputs is obtained from the one or more user devices 104 of the one or more users 102 upon at least one of: one or more actions performed by the one or more users 102 during the one or more digital interactive platforms, and the current state of the one or more digital interactive platforms. In an embodiment, the second one or more inputs includes the second information associated with the one or more real-time face expressions provided by the one or more users 102, on at least one of: the one or more actions performed by the one or more users 102 during the one or more digital interactive platforms, and the current state of the one or more digital interactive platforms.

At step 408, the corresponding one or more characters providing the one or more face expressions is determined to be played as the one or more animated media contents with the one or more video contents, based on the second one or more inputs from the one or more user devices 104 of the one or more users 102, to optimize the user experience in the one or more digital interactive platforms, by the machine learning model.

The present invention has following advantages. The present invention is configured to optimize the user experience in the one or more digital interactive platforms by generating the one or more characters associated with the one or more digital interactive platforms. The present invention with the computer-implemented system 106 is configured to provide the one or more animated media contents to be played with the one or more video contents, which maximizes the user experience during playing of the one or more digital interactive platforms.

The present invention is configured to increase a scalability of sports and presenters based on artificial intelligence and machine learning solutions rather than physical increase of people. The present invention helps in reducing cost and increasing savings by allowing seamless digital interactive platforms across 24/7 spectrum with real feel like and personalized sports presenters.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments herein can comprise hardware and software elements. The embodiments that are implemented in software include but are not limited to, firmware, resident software, microcode, and the like. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, an apparatus, or a device.

The medium can be an electronic, a magnetic, an optical, an electromagnetic, an infrared, or a semiconductor system (or an apparatus or a device) or a propagation medium. Examples of a computer-readable medium include a semiconductor or solid-state memory, a magnetic tape, a removable computer diskette, a random-access memory (RAM), a read-only memory (ROM), a rigid magnetic disk and an optical disk. Current examples of optical disks include a compact disk-read only memory (CD-ROM), a compact disk-read/write (CD-R/W) and a DVD.

Input/output (I/O) devices (including but not limited to keyboards, displays, pointing devices, and the like.) can be coupled to the computer-implemented system 106 either directly or through intervening I/O controllers. Network adapters may also be coupled to the computer-implemented system 106 to enable a data processing system to become coupled to other data processing systems or remote printers or storage devices through intervening private or public networks. Modems, cable modem and Ethernet cards are just a few of the currently available types of network adapters.

A representative hardware environment for practicing the embodiments may include a hardware configuration of an information handling/computer-implemented system 106 in accordance with the embodiments herein. The computer-implemented system 106 herein comprises at least one of: a processor or a central processing unit (CPU). The CPUs are interconnected via the system bus 212 to various devices such as a random-access memory (RAM), read-only memory (ROM), and an input/output (I/O) adapter. The I/O adapter can connect to peripheral devices, such as disk units and tape drives, or other program storage devices that are readable by the computer-implemented system 106. The computer-implemented system 106 can read the inventive instructions on the program storage devices and follow these instructions to execute the methodology of the embodiments herein.

The computer-implemented system 106 further includes a user interface adapter that connects a keyboard, a mouse, a speaker, a microphone, and/or other user interface devices such as a touch screen device (not shown) to the bus to gather user input. Additionally, a communication adapter connects the bus to a data processing network, and a display adapter connects the bus to a display device which may be embodied as an output device such as a monitor, a printer, or a transmitter, for example.

A description of an embodiment with several components in communication with each other does not imply that all such components are required. On the contrary, a variety of optional components are described to illustrate the wide variety of possible embodiments of the invention. When a single device or article is described herein, it will be apparent that more than one device/article (whether or not they cooperate) may be used in place of a single device/article. Similarly, where more than one device or article is described herein (whether or not they cooperate), it will be apparent that a single device/article may be used in place of the more than one device or article, or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, and the like. Of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open-ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

## Claims

1. A computer-implemented system (106) for generating one or more characters associated with one or more digital interactive platforms to optimize a user experience in the one or more digital interactive platforms, the computer-implemented system (106) comprising:
one or more hardware processors (216); and
a memory (202) coupled to the one or more hardware processors (216), wherein the memory (202) comprises a set of program instructions in form of a plurality of subsystems (108), configured to be executed by the one or more hardware processors (216), wherein the plurality of subsystems (108) comprises:
a character creating subsystem (204) configured to pre-create the one or more characters for one or more users (102) based on first one or more inputs from one or more user devices (104) of the one or more users (102), by at least one of: diffusion models, a cycle generative adversarial network (GAN) model, and a pix2pix model,
wherein the one or more characters being assigned with one or more face expressions based on the first one or more inputs from the one or more users (102);
a character selecting subsystem (206) configured to select at least one character with the one or more face expressions during playing of one or more video contents associated with the one or more digital interactive platforms based on at least one of: historical data associated with the one or more digital interactive platforms and the first one or more inputs from the one or more user devices (104) of the one or more users (102);
an input obtaining subsystem (208) configured to obtain second one or more inputs from the one or more user devices (104) of the one or more users (102) upon at least one of: one or more actions performed by the one or more users (102) during the one or more digital interactive platforms, and a current state of the one or more digital interactive platforms; and
a character determining subsystem (210) configured to determine corresponding one or more characters providing the one or more face expressions to be played as one or more animated media contents with the one or more video contents, based on the second one or more inputs from the one or more user devices (104) of the one or more users (102), to optimize the user experience in the one or more digital interactive platforms, by a machine learning model.

2. The computer-implemented system (106) as claimed in claim 1, wherein the first one or more inputs comprises first information associated with at least one of:
a selection of the one or more characters in the one or more digital interactive platforms, and assigning of the one or more face expressions to each of the one or
more characters in the one or more digital interactive platforms.

3. The computer-implemented system (106) as claimed in claim 1, wherein the second one or more inputs comprises second information associated with one or more real-time face expressions provided by the one or more users (102), on at least one of: the one or more actions performed by the one or more users (102) during the one or more digital interactive platforms, and the current state of the one or more digital interactive platforms.

4. The computer-implemented system (106) as claimed in claim 1, wherein the one or more pre-created characters with the one or more face expressions, is pre-stored in a cloud database comprising at least one of: a content delivery network, and an object storage service.

5. The computer-implemented system (106) as claimed in claim 1, wherein in determining, by the machine learning model, the corresponding one or more characters providing the one or more face expressions to be played with the one or more video contents, the character determining subsystem (210) is configured to:
obtain the second one or more inputs comprising the second information associated with the one or more real-time face expressions provided by the one or more users (102), on at least one of: the one or more actions performed by the one or more users (102) during the one or more digital interactive platforms, and the current state of the one or more digital interactive platforms;
compare the one or more real-time face expressions provided by the one or more users (102), with the one or more face expressions assigned to the one or more pre-created characters; and
determine the corresponding one or more characters providing the one or more face expressions to be played as the one or more animated media contents with the one or more video contents based on the comparison of the one or more real-time face expressions provided by the one or more users (102), with the one or more face expressions assigned to the one or more pre-created characters, by the machine learning model.

6. The computer-implemented system (106) as claimed in claim 1, wherein the one or more face expressions provided by the one or more characters, is dynamically updated based on the one or more real-time face expressions provided by the one or more users (102).

7. The computer-implemented system (106) as claimed in claim 1, wherein the one or more animated media contents comprises at least one of: the determined one or more characters providing the one or more face expressions to be played with the one or more video contents, and second one or more video contents, to optimize the user experience in the one or more digital interactive platforms, and
wherein the second one or more video contents is played upon the one or more user actions performed by the one or more users (102) in the one or more video contents.

8. The computer-implemented system (106) as claimed in claim 1, wherein the character creating subsystem (204) is further configured to create second one or more characters with the one or more face expressions as the one or more animated media contents based on transformers when the one or more users (102) personalizes the one or more video contents associated with the one or more digital interactive platforms.

9. A computer-implemented method (400) for generating one or more characters associated with one or more digital interactive platforms to optimize a user experience in the one or more digital interactive platforms, the computer-implemented method (400) comprising:
pre-creating (402), by one or more hardware processors (216), one or more characters for one or more users (102) based on first one or more inputs from one or more user devices (104) of the one or more users (102), by at least one of: diffusion models, a cycle generative adversarial network (GAN) model, and a pix2pix model,
wherein the one or more characters being assigned with one or more face expressions based on the first one or more inputs from the one or more users (102);
selecting (404), by the one or more hardware processors (216), at least one character with the one or more face expressions during playing of one or more video contents associated with the one or more digital interactive platforms based on at least one of: historical data associated with the one or more digital interactive platforms and the first one or more inputs from the one or more user devices (104) of the one or more users (102);
obtaining (406), by the one or more hardware processors (216), second one or more inputs from the one or more user devices (104) of the one or more users (102) upon at least one of: one or more actions performed by the one or more users (102) during the one or more digital interactive platforms, and a current state of the one or more digital interactive platforms; and
determining (408), by the one or more hardware processors (216), corresponding one or more characters providing the one or more face expressions to be played as one or more animated media contents with the one or more video contents, based on the second one or more inputs from the one or more user devices (104) of the one or more users (102), to optimize the user experience in the one or more digital interactive platforms, by a machine learning model.

10. The computer-implemented method (400) as claimed in claim 9, wherein the first one or more inputs comprises first information associated with at least one of: a selection of the one or more characters in the one or more digital interactive platforms, and assigning of the one or more face expressions to each of the one or more characters in the one or more digital interactive platforms.

11. The computer-implemented method (400) as claimed in claim 9, wherein the second one or more inputs comprises second information associated with one or more real-time face expressions provided by the one or more users (102), on at least one of: the one or more actions performed by the one or more users (102) during the one or more digital interactive platforms, and the current state of the one or more digital interactive platforms.

12. The computer-implemented method (400) as claimed in claim 9, wherein the one or more pre-created characters with the one or more face expressions, is pre-stored in a cloud database comprising at least one of: a content delivery network, and an object storage service.

13. The computer-implemented method (400) as claimed in claim 9, wherein determining (408), by the machine learning model, the corresponding one or more characters providing the one or more face expressions to be played with the one or more video contents, comprises:
obtaining, by the one or more hardware processors (216), the second one or more inputs comprising the second information associated with the one or more real-time face expressions provided by the one or more users (102), on at least one of: the one or more actions performed by the one or more users (102) during the one or more digital interactive platforms, and the current state of the one or more digital interactive platforms;
comparing, by the one or more hardware processors (216), the one or more real-time face expressions provided by the one or more users (102), with the one or more face expressions assigned to the one or more pre-created characters; and
determining, by the one or more hardware processors (216), the corresponding one or more characters providing the one or more face expressions to be played as the one or more animated media contents with the one or more video contents based on the comparison of the one or more real-time face expressions provided by the one or more users (102), with the one or more face expressions assigned to the one or more pre-created characters, by the machine learning model.

14. The computer-implemented method (400) as claimed in claim 9, wherein the one or more face expressions provided by the one or more characters, is dynamically updated based on the one or more real-time face expressions provided by the one or more users (102).

15. The computer-implemented method (400) as claimed in claim 9, wherein the one or more animated media contents comprises at least one of: the determined one or more characters providing the one or more face expressions to be played with the one or more video contents, and second one or more video contents, to optimize the user experience in the one or more digital interactive platforms, and
wherein the second one or more video contents is played upon the one or more user actions performed by the one or more users (102) in the one or more video contents.

16. The computer-implemented method (400) as claimed in claim 9, further comprising creating, by the one or more hardware processors (216), second one or more characters with the one or more face expressions as the one or more animated media contents based on transformers when the one or more users (102) personalizes the one or more video contents associated with the one or more digital interactive platforms.
